# EUROPÄISCHE PATENTSCHRIFT

(11) **EP 1 609 705 B1**
(45) Veröffentlichungstag und Bekanntmachung des Hinweises auf die Patenterteilung: **19.11.2008**
(21) Anmeldenummer: 05450095.4
(22) Anmeldetag: 31.05.2005
(51) Int. Cl.: B62D 33/023, B62D 63/06, B62D 29/00

(54) **Bordwand eines Anhängers, Profilelement sowie Verfahren zum Herstellen zum Zusammenbauen einer derartigen Bordwand**
Sideboard of a trailer, as well as method of production or assembly of such a sideboard.
Ridelle pour remorque et procédé pour la production ou l'assemblage d'une telle ridelle

(30) Priorität: 23.06.2004 AT 4382004 U
(43) Veröffentlichungstag der Anmeldung: 28.12.2005
(73) Patentinhaber: Pongratz Trailer-Group GmbH, 8712 Proleb (AT)
(72) Erfinder: Pongratz, Herwig, 8712 Proleb (AT)
(74) Vertreter: Miksovsky, Alexander

(56) Entgegenhaltungen:
- DE-A1- 10 013 239
- US-A- 3 266 836
- US-A- 3 524 659

## Beschreibung

Die vorliegende Erfindung bezieht sich auf eine Bordwand eines Anhängers, insbesondere eines PKW-Anhängers, welche aus am Umfang einer im wesentlichen rechteckigen Ladefläche des Anhängers angeordneten Profilelementen besteht, welche mit der Karosserie, insbesondere der Ladefläche des Anhängers, und/oder miteinander koppelbar und verbindbar sind, wobei wenigstens ein Profilelement an einem einem Eckbereich der Ladefläche entsprechenden Ende mit einem von der Unterseite des Profilelements in an dem Anhänger angeordneten Zustand vorragenden, im wesentlichen vertikal verlaufenden Fortsatz ausgebildet ist, welcher in einer komplementären, im wesentlichen rohrförmigen Ausnehmung eines darunter liegenden Profilelements oder der darunter liegenden Ladefläche aufnehmbar ist. Die vorliegende Erfindung bezieht sich weiters auf ein Profilelement zur Herstellung einer derartigen Bordwand sowie auf ein Verfahren zum Zusammenbauen einer Bordwand eines Anhängers, insbesondere eines PKW-Anhängers, welcher aus am Umfang einer im wesentlichen rechteckigen Ladefläche des Anhängers angeordneten Profilelementen besteht, unter Verwendung von Profilelementen.

Im Zusammenhang mit der Herstellung von Bordwänden für Fahrzeuge sind unterschiedliche Ausführungsformen bekannt, wobei üblicherweise selbst für den Fall, daß eine derartige Bordwand aus einer Mehrzahl von Profilelementen zusammengebaut wird, welche im wesentlichen flächige bzw. plattenförmige Profilelemente sind, diese üblicherweise über entsprechende Verriegelungs- und Einrastelemente derart miteinander verbunden werden, daß ein nachträgliches Lösen bzw.

Zerlegen der Bordwand oder zumindest ein Entfernen von Teilbereichen derselben, beispielsweise zur Anpassung an unterschiedliche, erforderliche Höhen, nicht mehr möglich ist. In diesem Zusammenhang wird beispielsweise auf die EP-A 0 324 722, die DE-OS 35 38 188, die AT-B 323 574, die DE-OS 22 07 334, die AT-B 370 048, die EP-A 0 271 137 oder die EP-A 0 314 119 verwiesen.

Nachteilig bei diesen bekannten Ausführungsformen ist somit die Tatsache, daß nach einem erfolgten Zusammenbau der Bordwand diese nicht mehr in Anpassung an unterschiedliche Anforderungen, insbesondere an unterschiedliche Höhen entsprechend zu transportierenden Gütern verändert werden können. Dieser Nachteil ist insbesondere bei der Ausbildung von Anhängern für einen PKW nachteilig, da derartige Anhänger, insbesondere wenn sie ungebremst sind, im Hinblick auf eine Gewichtsreduzierung optimiert werden müssen.

Ein Anhänger mit einer Bordwand der eingangs genannten Art ist beispielsweise der DE 100 13 239 A1 zu entnehmen, wobei darauf abgezielt wird, Verbesserungen hinsichtlich der stattungsmöglichkeiten und des Schutzes der Profile gegenüber einem Verschließ zu bieten.

Die vorliegende Erfindung zielt daher darauf ab, eine Bordwand der eingangs genannten Art sowie ein Profilelement hiefür als auch ein Verfahren zum Zusammenbauen einer derartigen Bordwand zur Verfügung zu stellen, bei welchen die obengenannten Nachteile vermieden sind, wobei es insbesondere möglich sein soll, mit einer konstruktiv einfachen und einfach handhabbaren Lösung eine Anpassung der Bordwand, insbesondere deren Höhe, an unterschiedliche Einsatzzwecke zu ermöglichen.

Zur Lösung dieser Aufgaben ist eine Bordwand der eingangs genannten Art im wesentlichen dadurch gekennzeichnet, daß sämtliche Profilelemente an ihrer Unterseite eine im wesentlichen normal auf die Erstreckung des Profilelements und in eigebautem Zustand zum Inneren des Anhängers gerichtete Auflagefläche einer Profilierung aufweisen, wobei die Profilierung mit einer entsprechenden komplementären Profilierung an einem jeweils darunter liegenden Profilelement und/oder der Ladefläche lösbar zusammenwirkt. Da wenigstens ein im wesentlichen flächiges oder plattenförmiges Profilelement mit einem Vorsprung bzw. Fortsatz an einem Endbereich ausgebildet ist, kann ein derartiges Profilelement in einfacher Weise in einer entsprechenden Ausnehmung eines darunter liegenden Profilelements und/oder der Ladefläche angeordnet werden, wobei über den Fortsatz bzw. Stift bzw. Zapfen eine provisorische Positionierung gelingt. Nach einer im wesentlichen bündigen Anordnung des Profilelements über der darunter liegenden Ladefläche oder einem darunter liegenden, weiteren Profilelement erfolgt über die Profilierungen an der Unterseite des Profilelements und komplementäre Profilierungen an dem darunter liegenden Profilelement eine zuverlässige und sichere Festlegung des wenigstens einen mit einem Fortsatz versehenen Profilelements. Dadurch, daß erfindungsgemäß auch die weiteren Profilelemente zumindest eine Profilierung für ein Zusammenwirken mit komplementären Profilierungen aufweisen, wird sichergestellt, daß nach einem Einsetzen des wenigstens einen mit einem Fortsatz ausgebildeten Profilelements und einer zumindest provisorischen Positionierung auch die weiteren Profilelemente entlang des Umfangs der Ladefläche des Anhängers sicher positioniert werden können und in weiterer Folge miteinander verbunden werden können. Es ist somit beispielsweise in einfacher Weise bei der erfindungsgemäßen Bordwand möglich, diese entsprechend den Anforderungen durch Aufsetzen zusätzlicher Profilelemente zu erhöhen, so daß auch bei Vorsehen einer beispielsweise eine geringe Fläche aufweisenden Ladefläche eines Anhängers entsprechend hohe Güter sicher festgelegt und transportiert werden können, wobei durch die in eingebautem Zustand zum Inneren des Anhängers gerichtete Profilierung die Stabilität und Zuverlässigkeit verbessert wird.

Für einen besonders einfachen und leicht handzuhabenden Zusammenbau der erfindungsgemäßen Bordwand sowie zur Einnahme einer zuverlässig gesicherten Lage des wenigstens einen mit einem Fortsatz ausgebildeten Profilelements wird gemäß einer bevorzugten Ausführungsform vorgeschlagen, daß das mit einem Fortsatz ausgebildete Profilelement entlang einer Längsseite des Anhängers in Fahrzeuglängsrichtung angeordnet ist.

Da die Stabilität der Bordwand auch bei Vorsehen einer entsprechenden Mehrzahl von die Höhe der Bordwand vergrößernden Profilelementen zum Ermöglichen eines Transports von hohen Gütern auch bei relativ erhöhten Geschwindigkeiten gegeben sein muß, ist gemäß einer weiters bevorzugten Ausführungsform vorgeschlagen, daß beide in Längsrichtung verlaufenden Profilelemente jeweils mit einem Fortsatz ausgebildet sind und daß die Fortsätze der Profilelemente einander gegenüberliegend, insbesondere an der Rückseite des Anhängers angeordnet sind.

Für eine zuverlässige Verbindung der Profilelemente bei einfacher Konstruktion derselben, insbesondere im Bereich der aneinander angrenzenden Profilierung, wird darüber hinaus vorgeschlagen, daß die Profilierung an der Unterseite eines Profilelements von der im wesentlichen normal auf die Erstreckung des Profilelements gerichteten Auflagefläche gebildet ist, an welche ein nach unten und nach außen abgewinkelter Flansch anschließt, wobei die Auflagefläche mit einer im wesentlichen ebenen Begrenzungsfläche eines darunter liegenden Profilelements und/oder der Ladefläche zusammenwirkt und der Flansch in einer unterhalb des Niveaus der Begrenzungsfläche angeordneten Rille aufnehmbar ist, wie dies einer weiters bevorzugten Ausführungsform der Erfindung entspricht. Derartige Auflage- oder Begrenzungsflächen lassen sich entsprechend den aufzunehmenden Beanspruchungen ausreichend groß dimensionieren, so daß die erforderliche Zuverlässigkeit bzw. Stabilität und somit Verkehrstauglichkeit gegeben ist.

Zur Erhöhung der Stabilität einzelner Profilelemente sowie zur Erhöhung der Steifigkeit derselben wird gemäß einer weiters bevorzugten Ausführungsform vorgeschlagen, daß jedes Profilelement wenigstens an seiner Oberseite mit einem verstärkenden bzw. Verstärkungsprofil, insbesondere einem Hohlkammerprofil, ausgebildet ist, an welchem insbesondere die Begrenzungsfläche für ein Zusammenwirken mit einem darüber angeordneten Profilelement ausgebildet ist. Derartige Hohlkammerprofile tragen zur Erhöhung der Festigkeit der gegebenenfalls eine größere Länge aufweisenden Profilelemente bei, wobei sie zusätzlich zur Bereitstellung entsprechend großflächig dimensionierter Begrenzungsflächen bzw. Auflageflächen aneinander angrenzender Profilelemente dienen können.

Um ein einfaches Einsetzen bzw. Festlegen des wenigstens einen mit einem Fortsatz ausgebildeten Profilelements und ein nachträgliches Verschwenken in eine mit anschließenden Profilelementen bündige Lage zu ermöglichen, ist gemäß einer weiters bevorzugten Ausführungsform vorgesehen, daß das den Fortsatz aufweisende Profilelement in einem an den Fortsatz anschließenden Bereich ohne Profilierung, insbesondere ohne hintergreifenden Flansch, ausgebildet ist.

Wie oben bereits angeführt, ist bei der erfindungsgemäßen Bordwand vorgesehen, daß wenigstens ein Profilelement mit einem für eine provisorische Montage vorgesehenen, vertikalen Fortsatz ausgebildet ist, während daran anschließende Profilelemente im wesentlichen über ihre Profilierungen im Bereich der Grenzflächen zwischen benachbarten Profilelementen gehalten bzw. verriegelt werden. Für eine Verbindung der aneinander in Umfangsrichtung angrenzenden Profilelemente ist gemäß einer weiters bevorzugten Ausführungsform vorgesehen, daß die Profilelemente an ihren Endbereichen im Bereich der Ecken der Ladefläche des Anhängers miteinander über Verriegelungselemente, insbesondere Spannelemente, verbunden bzw. verbindbar sind.

Zur Erhöhung der Stabilität der erfindungsgemäßen Bordwand wird gemäß einer weiters bevorzugten Ausführungsform vorgeschlagen, daß die Profilelemente entlang ihrer Endbereiche mit zueinander komplementären Profilierungen ausgebildet sind. Durch derartige zusätzliche Profilierungen, welche in zusammengebautem Zustand insbesondere im wesentlichen in Höhenrichtung der Bordwand verlaufen und/oder übereinander angeordnet sind, wird neben der Festlegung über die Profilierungen an den jeweils darunter liegenden Profilelementen auch in Umfangsrichtung und zusätzlich zu den Verriegelungselementen, insbesondere Spannelementen, eine Versteifung der Konstruktion der erfindungsgemäßen Bordwand erzielt.

Wie oben bereits angedeutet, ist insbesondere im Zusammenhang mit sogenannten leichten Anhängern, welche bei Personenkraftfahrzeugen eingesetzt werden, eine Reduktion bzw. Minimierung des Eigengewichts des Anhängers von besonderem Interesse. In diesem Zusammenhang wird gemäß einer weiters bevorzugten Ausführungsform vorgesehen, daß die Bordwand bzw. die Profilelemente aus einem Leichtmetall, insbesondere aus Aluminium, hergestellt ist bzw. sind.

Zur Lösung der obengenannten Aufgaben ist neben einer Bordwand, welche oben im Detail erörtert wurde, ein erfindungsgemäßes Profilelement zur Herstellung einer Bordwand im wesentlichen dadurch gekennzeichnet, daß es an seiner Unterseite eine in eingebautem Zustand zum Inneren des Anhängers gerichtete Profilierung und gegebenenfalls an einem Endbereich einen im wesentlichen vertikal vorragenden Fortsatz aufweist.

Ein wesentliches Kriterium der erfindungsgemäßen Bordwand ist ein einfacher Aufbau bzw. Zusammenbau derselben, wobei zur Lösung der obengenannten Aufgaben in diesem Zusammenhang für ein Verfahren der eingangs genannten Art vorgeschlagen wird, daß es die folgenden Schritte umfaßt:
Einsetzen eines Profilelements mit einem von der Unterseite vorragenden Fortsatz in eine entsprechende Ausnehmung in einer zum Inneren der Ladefläche verschwenkten Lage des Profilelements;
Verschwenken des Profilelements um den in der Ausnehmung aufgenommenen Fortsatz in eine mit der Ladefläche oder einem darunter liegenden Profilelement im wesentlichen bündige bzw. fluchtende Lage;
Anordnen wenigstens eines weiteren, in Umfangsrichtung anschließenden Profilelements an der Ladefläche und/oder einem darunter liegenden Profilelement; und
Verbinden bzw. Koppeln der aneinander anschließenden Profilelemente.

Es läßt sich somit insbesondere von einer Person ein schrittweiser Aufbau der erfindungsgemäßen Bordwand in einfacher Weise und im wesentlichen ohne Zuhilfenahme von speziellen Werkzeugen vornehmen.

Die Erfindung wird nachfolgend anhand von einem in der beiliegenden Zeichnung schematisch dargestellten Ausführungsbeispiel näher erläutert. In dieser zeigen:
Fig. 1 eine teilweise Seitenansicht eines Anhängers, insbesondere eines PKW-Anhängers, mit einer erfindungsgemäßen Bordwand;
Fig. 2 eine teilweise Rückansicht entsprechend dem Pfeil II der Fig. 1 auf den Anhänger mit der erfindungsgemäßen Bordwand;
Fig. 3 eine schematische Draufsicht auf einen Anhänger mit einer erfindungsgemäßen Bordwand zur Veranschaulichung des erfindungsgemäßen Verfahrens zum Zusammenbau der erfindungsgemäßen Bordwand;
Fig. 4 in vergrößertem Maßstab einen Teilschnitt entlang der Linie IV-IV der erfindungsgemäßen Bordwand in zusammengebautem Zustand von in Höhenrichtung aneinander abgrenzenden Profilelementen; und
Fig. 5 in nochmals vergrößertem Maßstab eine Detailansicht des Bereichs V der Fig. 4.

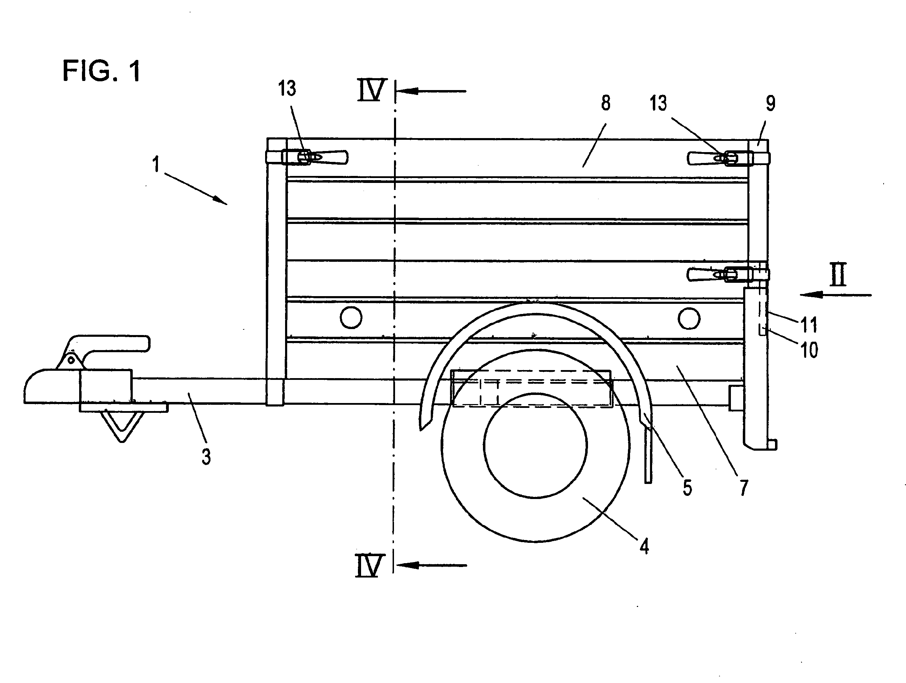

In Fig. 1 bis 3 ist allgemein ein Anhänger mit 1 bezeichnet, wobei eine Rahmen- bzw. Karosseriekönstruktion schematisch mit 2 angedeutet ist, an welche eine Deichsel 3 für eine Kopplung an ein nicht näher dargestelltes Zugfahrzeug anschließt. An der Karosseriekonstruktion sind in bekannter Weise Räder 4 gelagert, wobei ergänzend Kotschützer 5 angedeutet sind.

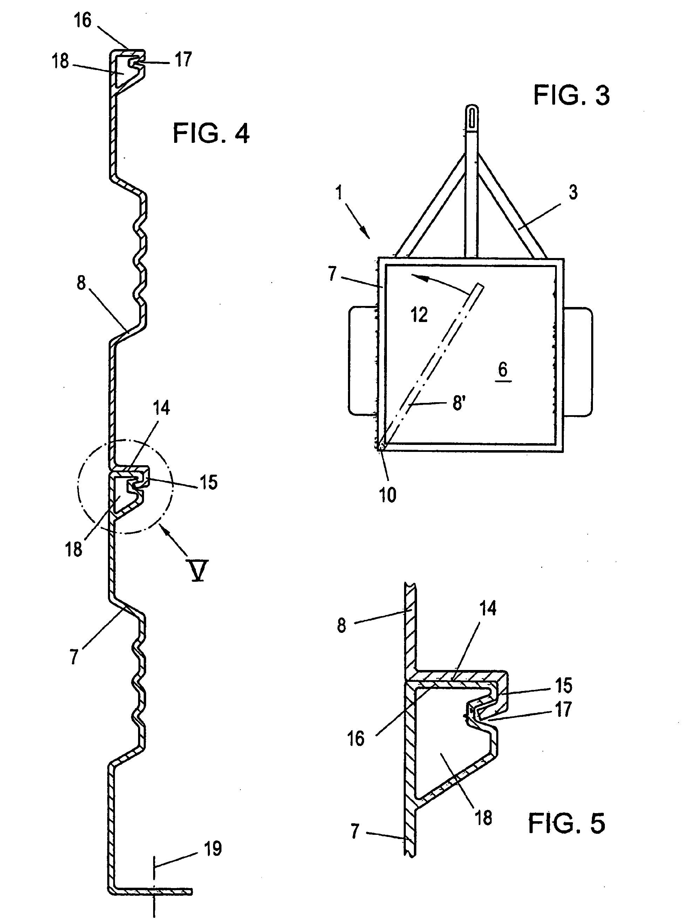

Der Anhänger 1 weist eine im wesentlichen rechteckige Lagefläche 6 auf, wie dies in Fig. 3 ersichtlich ist, wobei zur Begrenzung der Ladefläche 6 eine Bordwand vorgesehen ist, welche aus einer Mehrzahl von im wesentlichen flächigen bzw. plattenförmigen Profilelementen besteht.

Bei der in Fig. 1 bis 3 gezeigten Ausführungsformen sind direkt an der Karosserie- bzw. Rahmenkonstruktion 2 oder der Ladefläche 6 eine erste Höhe aufweisende Profilelemente 7 angeordnet, welche in in Fig. 4 angedeuteter Weise im wesentlichen fest mit der Ladefläche 6 oder der Stützkonstruktion 2 verbunden sind.

Zur Erhöhung der Höhe der Bordwand werden zusätzliche Profilelemente 8 und 9 eingesetzt, wobei die in Längsrichtung des Anhängers 1 verlaufenden Profilelemente 8 bei der in den Zeichnung dargestellten Ausführungsform jeweils an dem der Rückseite des Anhängers 1 entsprechenden Ende einen Fortsatz bzw. Stift bzw. Zapfen 10 aufweisen, welcher in eine entsprechende rohrförmige Ausnehmung 11 in dem jeweils darunter liegenden Profilelement 7 eingreift.

Für ein Zusammenbauen bzw. ein Anordnen der zusätzlichen Profilelemente 8 und 9 an den bereits bestehenden bzw. montierten Profilelementen 7 wird, wie dies in Fig. 3 angedeutet ist, ein Profilelement 8, welches einen entsprechenden Fortsatz 10 aufweist, in einer im wesentlichen zur Mitte der Ladefläche 6 verschwenkten Lage angeordnet und mit dem Fortsatz 10 in der komplementären, im wesentlichen rohrförmigen Ausnehmung 11 eingesetzt, wobei diese verschwenkte Lage des Profilelements in Fig. 3 mit 8' angedeutet ist. Nach einem Einsetzen des Fortsatzes 10 in die entsprechende Ausnehmung 11 erfolgt ein Verschwenken des Profilelements 8 entsprechend dem Pfeil 12 in eine mit der Begrenzung der Ladefläche 6 bzw. einem bereits angeordneten, darunter liegenden Profilelement 7 fluchtende Lage, so daß in einem derartigen ersten Verfahrensschritt eine Seitenkante des Anhängers 1 mit einem entsprechenden zusätzlichen Profilelement 8 versehen ist.

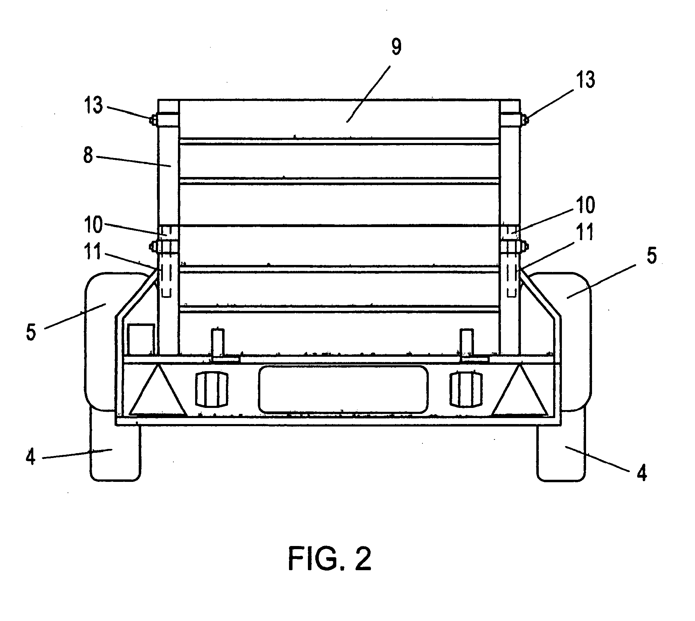

Da bei der in Fig. 1 und 2 dargestellten Ausführungsform auch das zweite Profilelement 8, welches in Längsrichtung des Anhängers 1 verläuft, ebenfalls mit einem im wesentlichen vertikalen Fortsatz 10 ausgebildet ist, erfolgt nachträglich nach einem Einsetzen des linken Profilelements 8', wie dies in Fig. 3 angedeutet ist, auch an der zweiten Längsseite ein Einsetzen eines ähnlichen Profilelements 8 in einer zum Inneren der Ladefläche verschwenkten Lage, worauf auch das zweite, in Längsrichtung der Ladefläche 6 verlaufende Profilelement 8 in eine mit dem darunter liegenden Profilelement 7 und/oder der Ladefläche 6 bündige Lage verschwenkt wird.

Nach einem Anordnen der in Längsrichtung verlaufenden Profilelemente 8, wobei diese über an der Unterseite vorgesehene Profilierungen mit an der Oberseite der darunter liegenden Profilelemente 7 komplementären Profilierungen zusammenwirken, wie dies unter Bezugnahme auf Fig. 4 und 5 unten im Detail erörtert werden wird, werden auch die an den Breitseiten, d.h. an der Vorderseite und Rückseite, anzuordnenden, zusätzlichen Profilelemente 9 unmittelbar an den darunter liegenden Profilelementen 7 bzw. der Ladefläche 6 angeordnet, wobei bei diesen in Breitenrichtung verlaufenden Profilelementen 9 lediglich eine Festlegung über Profilierungen an den aneinander angrenzenden Oberseiten und Unterseiten vorgenommen wird. Für eine Verbindung der aneinander angrenzenden bzw. anschließenden Profilelemente 8 und 9 in Umfangsrichtung sind Verbindungselemente, insbesondere Spannelemente, 13 vorgesehen.

Neben der Festlegung wenigstens eines Profilelements 8 über den Fortsatz 10 sind zusätzliche Profilierungen vorgesehen,
wobei aus Fig. 4 und 5 ersichtlich ist, daß die Profilelemente 8 und ihre Unterseite eine im wesentlichen zum Inneren der Ladefläche 6 des Anhängers gerichtete Auflagefläche 14 aufweisen, wobei für eine zuverlässige Positionierung und Sicherung einer einzunehmenden Lage an die Auflagefläche 14 ein nach unten und wiederum nach außen abgewinkelter Flansch 15 anschließt. Die Auflagefläche 14 sowie der Flansch 15 wirken mit einer an einem darunterliegenden Profilelement 7 vorgesehenen Begrenzungsfläche 16 sowie einer hinterschnittenen Rille bzw. Nut 17 zusammen, wobei die Nut 17 entsprechend der abgewinkelten Lage des Flansches 15 unterhalb der durch die Begrenzungsfläche 16 definierten Ebene angeordnet ist.

Zur Erhöhung der Festigkeit bzw. Steifigkeit der verwendeten Profilelemente 7 und 8 ist insbesondere im Bereich der Begrenzungsfläche 16 ein Hohlkammerprofil 18 vorgesehen.

Während bei der in Fig. 4 dargestellten Ausführungsform das unten liegende Profilelement 7 über schematisch angedeutete Verschraubungen 19 fest mit der nicht näher dargestellten, darunter liegenden Ladefläche oder Rahmenkonstruktion verbunden ist, ist aus Fig. 4 ersichtlich, daß das Profilelement 8 an seinem oberen Ende ebenfalls mit einem Hohlkammerprofil 18 versehen ist, wobei im oberen Bereich des Profilelements 8 wiederum eine Begrenzungsfläche 16 sowie eine hinterschnitte Rille bzw. Nut 17 für eine Verbindung mit einem gegebenenfalls zusätzlich vorzusehenden Profilelement zur weiteren Erhöhung der Bordwand vorgesehen ist. Es läßt sich somit entsprechend der zu erzielenden Höhe eine Mehrzahl von Profilelementen 8 jeweils übereinander anordnen und sicher miteinander verbinden bzw. verriegeln.

Aus dem Obigen deutlich ersichtlich, daß nicht nur in einfacher Weise eine Anpassung der Höhe der Bordwand an unterschiedliche Erfordernisse möglich wird, sondern daß sich nach erfolgtem Einsatz durch ein einfaches Lösen der Verbindungs- bzw. Verriegelungselemente, insbesondere Spannelemente 13, und ein Entfernen der an der Breitseite vorgesehenen Profilelemente 9 sowie ein nachfolgendes Verschwenken der in Längsrichtung angeordneten Profilelemente 8 in die in Fig. 3 dargestellte Lage 8' in einer zum Zusammenbau umgekehrten Reihenfolge die einzelnen Profilelemente 8 und 9 der Bordwand wiederum entfernen lassen.

Für ein einfaches Einsetzen des wenigstens einen mit einem Fortsatz 10 versehenen Profilelements 7 sind in einem an dem Fortsatz 10 unmittelbar anschließenden Teilbereich die Profilierungen für ein Zusammenwirken mit einem darunter liegenden Profilelement 7 und/oder der Ladefläche 6 nicht vorgesehen, wobei insbesondere der Flansch 15 nicht ausgebildet ist.

Zur Erzielung eines entsprechend geringen Gewichts des Anhängers 1 sind die Profilelemente 8 und 9 und beispielsweise auch die Profilelemente 7 aus einem Leichtmetall, insbesondere Aluminium, hergestellt.

Anstelle der oben dargestellten Ausführungsform, wobei beide in Längsrichtung verlaufenden Profilelemente 8 jeweils mit einem Fortsatz 10 für eine Aufnahme in einer komplementären Ausnehmung 11 versehen sind, ist es ausreichend, wie dies oben bereits mehrfach erwähnt wurde, lediglich ein Profilelement mit einem entsprechenden Fortsatz 10 für ein Anordnen an wenigstens einer Umfangsseite der Bordwand an darunter liegenden Elementen auszubilden.

Anstelle der oben dargestellten Ausführungsform, bei welcher die in Seitenrichtung verlaufenden Profilelemente 8 jeweils mit einem Fortsatz 10 ausgebildet sind, kann auch wenigstens ein in Breitenrichtung verlaufendes Profilelement 9 mit einem entsprechenden Fortsatz 10 ausgebildet sein.

Bei Ausbildung der Rahmen- bzw. Tragkonstruktion 2 und/oder der Ladefläche 6 mit an die Profilierungen 14 und 15 angepaßten, komplementären Profilierungen kann anstelle eines Vorsehens von im wesentlichen fest mit der Ladefläche 6 verbundenen Profilelementen 7, wie dies in den Figuren dargestellt ist, auch ein Aufbau einer Bordwand mit Profilelementen 8 bzw. 9 unmittelbar anschließend an die Ladefläche 6 vorgenommen werden.

## Patentansprüche

1. Bordwand eines Anhängers, insbesondere eines PKW-Anhängers (1), welche aus am Umfang einer im wesentlichen rechteckigen Ladefläche (6) des Anhängers (1) angeordneten Profilelementen (7, 8, 9) besteht, welche mit der Karosserie (2), insbesondere der Ladefläche (6) des Anhängers (1), und/oder miteinander koppelbar und verbindbar sind, wobei wenigstens ein Profilelement (8) an einem einem Eckbereich der Ladefläche (6) entsprechenden Ende mit einem von der Unterseite des Profilelements (8) in an dem Anhänger (1) angeordneten Zustand vorragenden, im wesentlichen vertikal verlaufenden Fortsatz (10) ausgebildet ist, welcher in einer komplementären, im wesentlichen rohrförmigen Ausnehmung (11) eines darunter liegenden Profilelements (7) oder der darunter liegenden Ladefläche (6) aufnehmbar ist, **dadurch gekennzeichnet, daß** sämtliche Profilelemente (8, 9) an ihrer Unterseite eine in wesentlichen normal auf die Erstreckung des Profilelements und in eigebautem Zustand zum Inneren des Anhänger (1) gerichtete Auflagefläche einer Profilierung (14, 15) aufweisen, wobei die Profilierung mit einer entsprechenden komplementären Profilierung (16, 17) an einem jeweils darunter liegenden Profilelement (7) und/oder der Ladefläche (6) lösbar zusammenwirkt .

2. Bordwand nach Anspruch 1, **dadurch gekennzeichnet, daß** das mit einem Fortsatz (10) ausgebildete Profilelement (8) entlang einer Längsseite des Anhängers (1) in Fahrzeuglängsrichtung angeordnet ist.

3. Bordwand nach Anspruch 1 oder 2, **dadurch gekennzeichnet, daß** beide in Längsrichtung verlaufenden Profilelemente (8) jeweils mit einem Fortsatz (10) ausgebildet sind und daß die Fortsätze (10) der Profilelemente (8) einander gegenüberliegend, insbesondere an der Rückseite des Anhängers (1) angeordnet sind.

4. Bordwand nach Anspruch 1, 2 oder 3, **dadurch gekennzeichnet, daß** die Profilierung an der Unterseite eines Profilelements von der im wesentlichen normal auf die Erstreckung des Profilelements (8) gerichteten Auflagefläche (14) gebildet ist, an welche ein nach unten und nach außen abgewinkelter Flansch (15) anschließt, wobei die Auflagefläche (14) mit einer im wesentlichen ebenen Begrenzungsfläche (16) eines darunter liegenden Profilelements (7) und/oder der Ladefläche (6) zusammenwirkt und der Flansch (15) in einer unterhalb des Niveaus der Begrenzungsfläche (16) angeordneten Rille (17) aufnehmbar ist.

5. Bordwand nach Anspruch 4, **dadurch gekennzeichnet, daß** jedes Profilelement (7, 8, 9) wenigstens an seiner Oberseite mit einem verstärkenden bzw. Verstärkungsprofil (18), insbesondere einem Hohlkammerprofil, ausgebildet ist, an welchem insbesondere die Begrenzungsfläche (16) für ein Zusammenwirken mit einem darüber angeordneten Profilelement (8, 9) ausgebildet ist.

6. Bordwand nach Anspruch 4 oder 5, **dadurch gekennzeichnet, daß** das den Fortsatz (10) aufweisende Profilelement (8) in einem an den Fortsatz (10) anschließenden Bereich ohne Profilierung, insbesondere ohne hintergreifenden Flansch (15), ausgebildet ist.

7. Bordwand nach einem der Ansprüche 1 bis 6, **dadurch gekennzeichnet, daß** die Profilelemente (7, 8, 9) an ihren Endbereichen im Bereich der Ecken der Ladefläche (6) des Anhängers (1) miteinander über Verriegelungselemente (13), insbesondere Spannelemente, verbunden bzw. verbindbar sind.

8. Bordwand nach einem der Ansprüche 1 bis 7, **dadurch gekennzeichnet, daß** die Profilelemente (8, 9) entlang ihrer Endbereiche mit zueinander komplementären Profilierungen ausgebildet sind.

9. Bordwand nach einem der Ansprüche 1 bis 8, **dadurch gekennzeichnet, daß** die Bordwand bzw. die Profilelemente (7, 8, 9) aus einem Leichtmetall, insbesondere aus Aluminium, hergestellt ist bzw. sind.

10. Profilelement (8, 9) zur Herstellung einer Bordwand nach einem der Ansprüche 1 bis 9, **dadurch gekennzeichnet, daß** es an seiner Unterseite eine in eingebautem Zustand zum Inneren des Anhängers (1) gerichtete Profilierung (14, 15) und gegebenenfalls an einem Endbereich einen im wesentlichen vertikal vorragenden Fortsatz (10) aufweist.

11. Verfahren zum Zusammenbauen einer Bordwand eines Anhängers (1), insbesondere eines PKW-Anhängers, welcher aus am Umfang einer im wesentlichen rechteckigen Ladefläche (6) des Anhängers (1) angeordneten Profilelementen (7, 8, 9) besteht, unter Verwendung von Profilelementen nach einem der Ansprüche 1 bis 10, umfassend die folgenden Schritte:
Einsetzen eines Profilelements (8) mit einem von der Unterseite vorragenden Fortsatz (10) in eine entsprechende Ausnehmung (11) in einer zum Inneren der Ladefläche (6) verschwenkten Lage des Profilelements;
Verschwenken des Profilelements (8) um den in der Ausnehmung (11) aufgenommenen Fortsatz (10) in eine mit der Ladefläche (6) oder einem darunter liegenden Profilelement (7) im wesentlichen bündige bzw. fluchtende Lage;
Anordnen wenigstens eines weiteren, in Umfangsrichtung anschließenden Profilelements an der Ladefläche (6) und/oder einem darunter liegenden Profilelement (7); und
Verbinden bzw. Koppeln der aneinander anschließenden Profilelemente (7, 8).

## Claims

1. A board wall of a trailer, in particular a passenger car trailer (1), which is composed of profile elements (7, 8, 9) arranged about the periphery of a substantially rectangular loading area (6) of the trailer (1) and capable of being coupled and connected with the body (2), in particular the loading area (6), of the trailer (1) and/or with one another, wherein at least one profile element (8), on an end corresponding with a corner region of the loading area (6), is formed with a substantially vertically extending projection (10) projecting from the lower side of the profile element (8) in a state arranged on the trailer (1), which projection is receivable in a complementary, substantially tubular recess (11) of a profile element (7) located therebelow, or of the loading area (6) located therebelow, **characterized in that** each of the profile elements (8, 9), on its lower side, comprises a support surface of a profiling (14, 15) oriented substantially normal to the extension of the profile element and, in the installed state, towards the interior of the trailer (1), said profiling detachably cooperating with a corresponding complementary profiling (16, 17) provided on a respective profile element (7) located therebelow, and/or the loading area (6).

2. A board wall according to claim 1, **characterized in that** the profile element (8) configured with a projection (10) is arranged along a longitudinal side of the trailer (1), viewed in the longitudinal direction of the vehicle.

3. A board wall according to claim 1 or 2, **characterized in that** both of the profile elements (8) extending in the longitudinal direction are each formed with a projection (10), and that the projections (10) of the profile elements (8) are arranged opposite each other, in particular on the rear side of the trailer (1).

4. A board wall according to claim 1, 2 or 3, **characterized in that** the profiling provided on the lower side of a profile element is formed by the support surface (14) oriented substantially normal to the extension of the profile element (8) and on which a downwardly and outwardly angled flange (15) follows, wherein the support surface (14) cooperates with a substantially plane boundary surface (16) of a profile element (7) located therebelow, and/or the loading area (6), and the flange (15) is receivable in a groove (17) arranged below the level of the boundary surface (16).

5. A board wall according to claim 4, **characterized in that** each of the profile elements (7, 8, 9), at least on its upper surface, is formed with a reinforcing or reinforcement profile (18), in particular a hollow profile, on which, in particular, the boundary surface (16) is formed for cooperation with a profile element (8, 9) arranged thereabove.

6. A board wall according to claim 4 or 5, **characterized in that** the profile element (8) comprising the projection (10), in a portion following upon the projection (10), is designed without profiling and, in particular, without any flange (15) engaging from behind.

7. A board wall according to any one of claims 1 to 6, **characterized in that** the profile elements (7, 8, 9), in their end portions in the region of the corners of the loading area (6) of the trailer (1), are conne:cted or connectable with one another via locking elements (13), in particular bracing elements.

8. A board wall according to anyone of claims 1 to 7, **characterized in that** the profile elements (8, 9) are formed with mutually complementary profilings along their end portions.

9. A board wall according to any one of claims 1 to 8, **characterized in that** the board wall or side board, or profile elements (7, 8, 9), are made of light metal, in particular aluminium.

10. A profile element (8, 9) used for the production of a board wall or side board according to any one of claims 1 to 9, **characterized in that** it comprises, on its lower side, a profiling (14, 15) oriented towards the interior of the trailer (1) in the installed state and optionally, in an end portion, a substantially vertically projecting projection (10).

11. A method for assembling a board wall or side board of a trailer (1), in particular a passenger car trailer, which is composed of profile elements (7, 8, 9) arranged about the periphery of a substantially rectangular loading area (6) of the trailer (1), by using the profile elements according to any one of claims 1 to 10, comprising the steps of:
inserting a profile element (8), with a projection (10) projecting from its lower side, into a respective recess (11) in a profile element position pivoted towards the interior of the loading area (6);
pivoting the profile element (8) about the projection (10) received in the recess (11) into a position substantially flush or aligned with the loading area (6) or a profile element (7) located therebelow;
arranging on the loading surface (6) and/or a profile element (7) located therebelow, at least one further profile element following in the peripheral direction; and
connecting or coupling the adjoining profile elements (7, 8).

## Revendications

1. Paroi latérale d'une remorque, en particulier d'une remorque pour automobile (1), qui se compose d'éléments profilés (7, 8, 9) agencés sur la périphérie d'une surface de chargement (6) essentiellement rectangulaire de la remorque (1), lesquels peuvent être reliés ou couplés les uns aux autres et/ou à la carrosserie (2), en particulier à la surface de chargement (6) de la remorque (1), dans lequel au moins un élément profilé (8) est réalisé au niveau d'une extrémité correspondant à une zone de coin de la surface de chargement (6) avec un prolongement (10) s'étendant de manière essentiellement verticale, dépassant de la face inférieure de l'élément profilé (8) à l'état agencé au niveau de la remorque (1), lequel peut être reçu dans un évidement (11) complémentaire essentiellement tumulaire d'un élément profilé (7) sous-jacent ou de la surface de chargement (6) sous-jacente, **caractérisée en ce que** tous les éléments profilés (8, 9) présentent au niveau de leur face inférieure, une surface d'appui d'un profilage (14, 15) dirigée de manière essentiellement normale vers l'extension de l'élément profilé et à l'état monté vers l'intérieur de la remorque (1), dans lequel le profilage coopère de manière amovible avec un profilage (16, 17) complémentaire correspondant au niveau d'un élément profilé (7) respectivement sous-jacent et/ou de la surface de chargement (6).

2. Paroi latérale selon la revendication 1, **caractérisée en ce que** l'élément profilé (8) réalisé avec un prolongement (10) est agencé le long d'un grand côté de la remorque (1) dans le sens longitudinal du véhicule.

3. Paroi latérale selon la revendication 1 ou 2, **caractérisée en ce que** les deux éléments profilés (8) s'étendant dans le sens longitudinal sont réalisés respectivement avec un prolongement (10) et **en ce que** les prolongements (10) des éléments profilés (8) sont agencées les uns en face des autres, en particulier au niveau de la face arrière de la remorque (1).

4. Paroi latérale selon la revendication 1, 2 ou 3, **caractérisée en ce que** le profilage est formé au niveau de la face inférieure d'un élément profilé par la surface d'appui (14) dirigée de manière essentiellement normale vers l'extension de l'élément profilé (8), à laquelle se raccorde une bride (15) coudée vers le bas et vers l'extérieur, dans lequel la surface d'appui (14) coopère avec une surface de limitation (16) essentiellement plane d'un élément profilé (7) sous-jacent et/ou de à surface de chargement (6) et la bride (15) peut être reçue dans une gorge (17) agencée sous le niveau de la surface de limitation (16).

5. Paroi latérale selon la revendication 4, **caractérisée en ce que** chaque élément profilé (7, 8, 9) est réalisé au moins au niveau de sa face supérieure avec un profilé renforçant ou de renforcement (18), en particulier un profilé creux, auquel se raccorde notamment la surface de limitation (16) pour une coopération avec un élément profilé (8, 9) agencé au-dessus.

6. Paroi latérale selon la revendication 4 ou 5, **caractérisée en ce que** l'élément profilé (8) présentant le prolongement (10) est réalisé dans une zone se raccordant au prolongement (10) sans profilage, en particulier sans bride (15) venant en prise par dernière.

7. Paroi latérale selon l'une quelconque des revendications 1 à 6, **caractérisée en ce que** les éléments profilés (7, 8, 9) sont reliés ou peuvent être reliés les uns aux autres au niveau de leurs parties terminales dans la zone des coins de la surface de chargement (6) de la remorque (1) par le biais d'éléments de verrouillage (13), en particulier des éléments de serrage.

8. Paroi latérale selon l'une quelconque des revendications 1 à 7, **caractérisée en ce que** les éléments profilés (8, 9) sont réalisés le long de leurs parties terminales avec des profilages complémentaires les uns aux autres.

9. Paroi latérale selon l'une quelconque des revendications 1 à 8, **caractérisée en ce que** la paroi latérale ou les éléments profilés (7, 8, 9) est ou sont fabriqué(e)s en un métal léger, en particulier en aluminium.

10. Élément profilé (8, 9) pour la fabrication d'une paroi latérale selon l'une quelconque des revendications 1 à 9, **caractérisé en ce qu'**il présente au niveau de sa face inférieure un profilage (14, 15) dirigé à l'état monté vers l'intérieur de la remorque (1) et le cas échéant au niveau d'une partie terminale, un prolongement (10) dépassant de manière essentiellement verticale.

11. Procédé d'assemblage d'une paroi latérale d'une remorque (1), en particulier d'une remorque pour automobile, qui se compose d'éléments profilés (7, 8, 9) agencés sur la périphérie d'une surface de chargement (6) essentiellement rectangulaire de la remorque (1), en utilisant des éléments profilés selon l'une quelconque des revendications 1 à 10, comprenant les étapes suivantes :
insertion d'un élément profilé (8) avec un prolongement (10) dépassant de la face inférieure dans un évidement (11) correspondant dans une position basculée vers l'intérieur de la surface de chargement (6) de l'élément profilé ;
basculement de l'élément profilé (8) autour du prolongement (10) reçu dans l'évidement (11) dans une position essentiellement à fleur ou alignée avec la surface de chargement (6) ou avec un élément profilé (7) sous-jacent ;
agencement d'au moins un autre élément profilé se raccordant dans le sens périphérique au niveau de la surface de chargement (6) et/ou d'un élément profilé (7) sous-jacent ; et
liaison ou couplage des éléments profilés (7, 8) se raccordant les uns aux autres.
